# EUROPÄISCHE PATENTANMELDUNG

(11) **EP 1 854 711 A2**
(43) Veröffentlichungstag der Anmeldung: **14.11.2007**
(21) Anmeldenummer: 07006978.6
(22) Anmeldetag: 03.04.2007
(51) Int. Cl.: B62H 5/00, B62J 11/00

(54) **Halterung für Zweiradschloss**

(30) Priorität: 12.05.2006 DE 102006022333
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Eine Halterung zur Befestigung eines Zweiradschlosses an einem Rahmenabschnitt eines Zweirads, mit einer Haltevorrichtung (10), die ein Befestigungsmittel zur Befestigung der Haltevorrichtung an dem Rahmenabschnitt des Zweirads und eine Aufnahmehülse (12) zur Aufnahme eines Bügelabschnitts des Schlosses aufweist, ist dadurch gekennzeichnet, dass die Halterung ferner ein Einsatzstück (20) aufweist, das für eine Vormontage in die Aufnahmehülse einführbar und dort bezüglich der mittigen Längsachse der Aufnahmehülse in eine variable Winkellage drehbar ist, wobei das Einsatzstück in einer Endmontagestellung mittels wenigstens einer Fixiereinrichtung in seiner Winkellage an der Aufnahmehülse festgelegt ist, wobei das Einsatzstück in der Endmontagestellung bezüglich der mittigen Längsachse der Aufnahmehülse seitlich versetzt angeordnet ist, und wobei eine dem verbleibenden Innenraum der Aufnahmehülse zugewandte Seitenfläche des Einsatzstücks eine Verdrehsicherung für einen in die Aufnahmehülse eingeführten Bügelabschnitt des Schlosses bildet.

## Beschreibung

Die Erfindung betrifft eine Halterung zur Befestigung eines Zweiradschlosses an einem Rahmen eines Zweirads.

Zweiradschlösser, insbesondere Bügelschlösser, werden in der Regel zusammen mit einem Halter verwendet, mit dem das Schloss während der Nichtbenutzung an einem Rahmenabschnitt des Zweirads gehalten werden kann. Dabei soll das Schloss fest mit der Halterung verbunden sein, um seine Lage relativ zum Rahmen zu fixieren.

Allgemein sind Halterungen bekannt, bei denen das Schloss nur in einer bestimmten Winkelausrichtung zur Halterung in diese eingesetzt werden kann. Derartige Halterungen sehen in der Regel eine Anordnung innerhalb eines so genannten Rahmendreiecks des Zweirads vor. Wenn aber ein Schloss außerhalb des Rahmensdreiecks gehalten werden soll, beispielsweise bei Zweirädern mit außergewöhnlicher Rahmengeometrie, lassen sich diese Halterungen nicht sinnvoll einsetzen, da dann das Schloss unter Umständen seitlich vom Rahmen absteht.

Aufgabe der Erfindung ist es daher, eine Halterung zur Befestigung eines Zweiradschlosses an einem Rahmenabschnitt eines Zweirads zu schaffen, bei der das Schloss in einer weitgehend frei wählbaren Winkelausrichtung drehfest gehalten wird.

Diese Aufgabe wird durch die Merkmale des Anspruchs 1 gelöst und insbesondere durch eine Halterung zur Befestigung eines Zweiradschlosses an einem Rahmenabschnitt eines Zweirads, mit einer Haltevorrichtung, die ein Befestigungsmittel zur Befestigung der Haltevorrichtung an dem Rahmenabschnitt des Zweirads und eine Aufnahmehülse zur Aufnahme eines Bügelabschnitts des Schlosses aufweist, wobei die Halterung ferner ein Einsatzstück aufweist, das für eine Vormontage in die Aufnahmehülse einführbar und dort bezüglich der mittigen Längsachse der Aufnahmehülse in eine variable Winkellage drehbar ist, wobei das Einsatzstück in einer Endmontagestellung mittels wenigstens einer Fixiereinrichtung in seiner Winkellage an der Aufnahmehülse festgelegt ist, wobei das Einsatzstück in der Endmontagestellung bezüglich der mittigen Längsachse der Aufnahmehülse seitlich versetzt angeordnet ist, und wobei eine dem verbleibenden Innenraum der Aufnahmehülse zugewandte Seitenfläche des Einsatzstücks eine Verdrehsicherung für einen in die Aufnahmehülse eingeführten Bügelabschnitt des Schlosses bildet.

Innerhalb einer Aufnahmehülse der Halterung ist also ein Einsatzstück in einer bezüglich der Mittelachse der Aufnahmehülse asymmetrischen Position angeordnet, um dort in variabler, jedoch festlegbarer Winkelstellung eine kraftschlüssige und somit verdrehsichere Aufnahme für den Bügel zu bilden. Durch eine Fixiereinrichtung ist das Einsatzstück nach erfolgter Einstellung des Winkels zumindest bezüglich der Winkellage festlegbar, wobei die Fixiereinrichtung zusätzlich für eine axiale Festlegung des Einsatzstücks an der Aufnahmehülse sorgen kann.

Eine derartige Halterung zeichnet sich dadurch aus, dass auch Schlösser mit Bügeln, die einen nicht runden Querschnitt aufweisen, in einer variablen Winkelstellung drehfest am Rahmen eines Zweirads gehalten werden können. Aufgrund der bezüglich der Mitte der Aufnahmehülse seitlich versetzten Anordnung des Einsatzstücks ergeben sich eine kompakte Bauweise und eine platzsparende Anordnung des Einsatzstücks innerhalb der Aufnahmehülse, da kein umfängliches Umgreifen des Bügels durch das Einsatzstück erfolgen muss. Dennoch ist diese Anordnung stabil, da auftretende Querkräfte von der Aufnahmehülse aufgenommen werden können. Ein einfaches Einsetzen und Entnehmen eines Schlosses ist gewährleistet.

Die Halterung ist geeignet, Bügel sowohl in der Ausführung eines U-förmigen, starren Bügels als auch eines flexiblen Bügels, z.B. eines Spiralkabels, aufzunehmen. Die Aufnahmehülse ist an ihrer Innenseite rotationssymmetrisch ausgebildet, insbesondere weist sie einen runden Querschnitt, einen mehreckigen Querschnitt und/oder axial verlaufende Vertiefungen auf.

In einer bevorzugten Ausführungsform weist das Einsatzstück wenigstens einen (bezüglich der mittigen Längsachse der Aufnahmehülse) radial nach außen gerichteten Vorsprung auf, durch den das Einsatzstück in der Endmontagestellung axial zumindest in einer Richtung an der Aufnahmehülse festgelegt ist.

Hierbei wirkt der Vorsprung mit wenigstens einem axialen Anschlag der Aufnahmehülse zusammen. Ein derartiges Einsatzstück wird zunächst entlang der mittigen Längsachse der Aufnahmehülse axial in die Aufnahmehülse eingeführt. Von dieser Vormontagestellung ausgehend wird das Einsatzstück radial nach außen versetzt, um den Vorsprung in Eingriff mit dem Anschlag der Aufnahmehülse zu bringen, wodurch die Endmontagestellung des Einsatzstücks erreicht wird. Die gewünschte Winkellage des Einsatzstücks wird hierbei entweder nach dem Einführen des Einsatzstücks in die Aufnahmehülse oder nach dem radialen Versetzen des Einsatzstücks eingestellt. Der genannte Vorsprung kann an einem Längsende oder an einem Längsabschnitt zwischen den Längsenden des Einsatzstücks ausgebildet sein, wobei der Vorsprung dann beispielsweise mit einer zugeordneten Aussparung der Aufnahmehülse formschlüssig zusammenwirkt, um das Einsatzstück bezüglich der beiden axialen Richtungen an der Aufnahmehülse festzulegen.

Bei einer vorteilhaften Ausführungsform weist das Einsatzstück zwei an seinen Längsenden angeordnete seitlich abstehende Kragenabschnitte auf, die in der Endmontagestellung des Einsatzstücks in eine jeweilige Ringschulter der Aufnahmehülse eingreifen oder ein jeweiliges Längsende der Aufnahmehülse übergreifen. Hierdurch wird in der Endmontagestellung des Einsatzstücks ein im Querschnitt U-förmiges Umklammern der Aufnahmehülse bewirkt, und das Einsatzstück ist in beiden axialen Richtungen festgelegt.

Alternativ können am Einsatzstück mehrere radial nach außen ragende Vorsprünge über dessen Länge verteilt angeordnet sein, die mit entsprechenden Aussparungen, beispielsweise umfänglichen Nuten, an der Innenseite der Aufnahmehülse formschlüssig zusammenwirken.

Bevorzugt kann das Einsatzstück an einer Seitenfläche, welche der die Verdrehsicherung bildenden Seitenfläche gegenüberliegt, komplementär zu der Innenseitenfläche der Aufnahmehülse ausgebildet sein.

Vorteilhaft ist, wenn das Einsatzstück entlang seiner Längsrichtung zumindest im Bereich der Verdrehsicherung einen konstanten Querschnitt aufweist. Bei einer derartigen Halterung kann der Bügel von beiden Seiten in das Einsatzstück eingeführt werden, wodurch die Handhabung des Schlosses vereinfacht ist.

Alternativ kann sich der Querschnitt des Einsatzstücks in einer Längsrichtung verringern. Durch die sich daraus ergebende Keilform kann der Bügel in der Halterung verklemmt werden.

Bevorzugt kann die Fixiereinrichtung eine oder mehrere Schrauben oder Klemmstifte aufweisen.

Vorteilhafterweise kann die Aufnahmehülse und/oder das Einsatzstück mehrere Bohrungen zur Aufnahme der Fixiereinrichtung aufweisen. Hierdurch lässt sich das Einsatzstück in der Endmontagestellung besonders einfach festlegen. Ein durch das Schloss auf das Einsatzstück ausgeübtes Drehmoment wird über die Schrauben auf die Aufnahmehülse übertragen.

Bevorzugt sind die Bohrungen in gleichmäßiger Teilung angeordnet. Der Winkelabstand zwischen den Bohrungen kann beispielsweise 22,5° betragen.

In einer bevorzugten Ausführungsform ist die jeweilige Schraube bzw. der jeweilige Klemmstift bezüglich der Längsachse der Aufnahmehülse in axialer Richtung in die Aufnahmehülse eingesetzt und durchdringt hierbei einen Fixierabschnitt des Einsatzstücks. Das Einsatzstück lässt sich also von der Stirnseite der Aufnahmehülse aus festlegen, wodurch die Fixiereinrichtung über den gesamten Umfang unbeeinträchtigt von dem Befestigungsmittel zur Befestigung der Halterung am Rahmen eingebracht werden kann. Der Fixierabschnitt des Einsatzstücks wird bei dieser Ausführungsform insbesondere durch den zuvor genannten radialen Vorsprung bzw. Kragenabschnitt gebildet. Die jeweilige Schraube bzw. der jeweilige Klemmstift kann jedoch auch in radialer Richtung in die Aufnahmehülse und das Einsatzstück eingesetzt sein.

Die Fixiereinrichtung muss bei einer alternativen Ausführungsform nicht als separates Element ausgebildet sein, sondern kann durch eine Klemmverbindung gebildet sein, die beispielsweise durch axiale oder radiale Rippen und Nuten am Einsatzstück bzw. an der Aufnahmehülse gebildet ist, welche durch Klemmsitz zusammenwirken.

Weiterhin kann die Fixiereinrichtung auch eine Schnappverbindung sein, bei der radiale Vorsprünge des Einsatzstücks nicht nur zur axialen Festlegung, sondern aufgrund einer Ausbildung als Rastnasen eine radiale Fixierung bewirken. Sie können auch das Einsatzstück bezüglich der Winkellage festlegen, wenn an der Aufnahmehülse und/oder am Einsatzstück eine umfängliche Verzahnung vorgesehen ist.

Bevorzugt weist das Befestigungsmittel eine Rohrschelle, ein Spannband oder eine Lasche mit einer Befestigungsöse auf.

Vorteilhafterweise ist das Befestigungsmittel einstückig mit der Aufnahmehülse verbunden. Hierdurch lässt sich der Fertigungsaufwand reduzieren.

Es ist aber auch eine zweistückige Ausführung möglich, bei der das Befestigungsmittel beispielsweise mit der Aufnahmehülse für den Bügel verschraubt ist. Damit ist eine modulare Fertigung für eine Kombination der Aufnahmehülse mit unterschiedlichen Befestigungsmitteln möglich.

Die Aufgabe der Erfindung wird weiterhin durch die Merkmale des Anspruchs 13 und insbesondere durch ein Zweiradschlosssystem gelöst, das ein einen Bügel und einen Schlosskörper aufweisendes Zweiradschloss und eine Halterung der vorstehend erläuterten Art besitzt.

Vorzugsweise ist der in die Aufnahmehülse einführbare Bügelabschnitt (oder ein dem Bügelabschnitt zugeordnetes Adapterstück, z.B. als Bügelklemme) komplementär zu der Verdrehsicherung des Einsatzstücks ausgebildet. Hierdurch wird gewährleistet, dass der Bügel relativ zum Einsatzstück allenfalls in axialer Richtung verstellbar ist. Eine Änderung der Winkellage ist nicht möglich.

Bevorzugt weist der Bügelabschnitt (bzw. das Adapterstück) einen Anker mit T-förmigem Querschnitt oder eine axiale Rippe auf, wobei das Einsatzstück eine zugeordnete, im Querschnitt T-förmige Aussparung oder axiale Nut besitzt, wobei diese Anordnung auch zwischen Bügelabschnitt und Einsatzstück vertauscht sein kann.

Der Anker (bzw. das genannte Adapterstück) kann auf verschiedene Weise am Bügel angebracht werden, so kann die Befestigung durch Klemmung, aber auch durch Anschrauben, Angießen oder Aufschrumpfen erfolgen.

Alternativ kann der Bügelabschnitt einen nicht kreisrunden, insbesondere einen mehreckigen, speziell einen rechteckigen oder hexagonalen Querschnitt besitzen, so dass ein zusätzlicher Anker nicht vorgesehen werden muss.

Vorteilhafterweise kann der Bügelabschnitt (bzw. das Adapterstück) einen Anschlag aufweisen, der ein Einführen des Bügelabschnitts in die Aufnahmehülse begrenzt. Dadurch wird der Bügel in Einführrichtung in der Aufnahmehülse festgelegt. Nach dem Einführen des Bügels in die Aufnahmehülse kann anschließend der Schlosskörper am Bügel angebracht und verriegelt werden, wodurch der Bügel nun auch entgegen der Einführrichtung festgelegt ist und ein Verlust des Schlosses durch Hinausrutschen aus der Halterung oder durch unbefugte Entnahme vermieden wird.

Weitere Einzelheiten, Vorteile und Ziele der Erfindung ergeben sich aus den Unteransprüchen und der folgenden Beschreibung bevorzugter Ausführungsbeispiele, die anhand der Zeichnungen erläutert werden; in diesen zeigen:
- Fig. 1: eine perspektivische Ansicht einer Halterung;
- Fig. 2: eine perspektivische Ansicht eines Einsatzstücks;
- Fig. 3: eine perspektivische Ansicht der Halterung gemäß Fig. 1, wobei das Einsatzstück gemäß Fig. 2 in einer Endmontagestellung festgelegt ist;
- Fig. 4: eine perspektivische Ansicht eines Zweiradschlosses mit einem am Bügelabschnitt angeordneten Anker und
- Fig. 5: eine Seitenansicht des Zweiradschlosses gemäß Fig. 4, welches in der Halterung gemäß Fig. 3 befestigt ist.

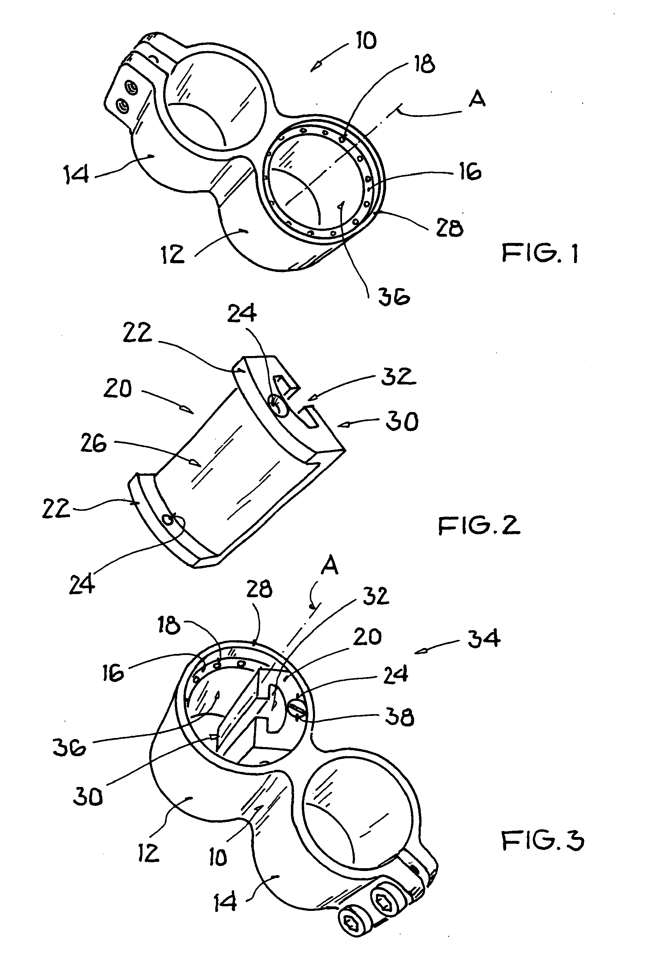

Fig. 1 stellt eine Haltevorrichtung 10 beispielsweise aus Kunststoff dar, die eine Aufnahmehülse 12 zur Aufnahme eines Bügelabschnitts eines Zweiradschlosses und eine Rohrschelle 14 zur Befestigung der Haltevorrichtung an einem Rahmenabschnitt eines Zweirads aufweist, wobei die Aufnahmehülse 12 und die Rohrschelle 14 jeweils hohlzylindrisch sind. Die Aufnahmehülse 12 besitzt eine mittige Längsachse A.

Die Aufnahmehülse 12 weist in ihren beiden axialen Endbereichen jeweils eine Ringschulter 16 auf, die mit einer Mehrzahl von in axialer Richtung eingebrachten, in gleichmäßiger Teilung angeordneten Bohrungen 18 versehen ist, wobei in der Zeichnung nur die eine Ringschulter 16 sichtbar ist.

Fig. 2 zeigt ein Einsatzstück 20 (ebenfalls z.B. aus Kunststoff), das an seinen Längsenden jeweils einen seitlich abstehenden Kragenabschnitt 22 aufweist, wobei das lichte Maß zwischen den Kragenabschnitten 22 der axialen Ausdehnung der Aufnahmehülse 12 zwischen den beiden Ringschultern 16 entspricht.

Die Kragenabschnitte 22 sind jeweils mit einer durchgängigen Fixierbohrung 24 versehen, die von den Stirnseiten der Kragenabschnitte 22 her angesenkt sind.

Die Außenseitenfläche 26 des Einsatzstücks 20, d.h. die Seite, die in einer Endmontagestellung der Aufnahmehülse 12 zugewandt ist, weist eine dem Innenradius der Aufnahmehülse 12 entsprechende konvexe Krümmung auf. Die Kragenabschnitte 22 sind ebenfalls in einer radialen Richtung gekrümmt, wobei der Radius der Krümmung dem Innenradius der Aufnahmehülse 12 im Bereich eines jeweils am Längsende ausgebildeten Randes 28 entspricht.

Auf einer der Außenseitenfläche 26 gegenüberliegenden Innenseitenfläche 30 des Einsatzstücks 20 ist eine im Querschnitt T-förmige, sich über die Länge des Einsatzstücks erstreckende Aussparung 32 angeordnet, durch die eine Verdrehsicherung gebildet wird.

Fig. 3 zeigt nun eine Halterung 34, die aus der Haltevorrichtung 10 und dem Einsatzstück 20 zusammengefügt ist. Die Montage erfolgt in der Weise, dass das Einsatzstück 20 zunächst im Wesentlichen mittig sowie in axialer Richtung vollständig in die Aufnahmehülse 12 eingeführt wird, danach ggf. bereits jetzt in die gewünschte Winkellage gedreht wird und anschließend in radialer Richtung nach außen versetzt wird, bis die Außenseitenfläche 26 eine Innenwand 36 der Aufnahmehülse berührt und die beiden Kragenabschnitte 22 die beiden Ringschultern 16 überdecken.

Zum Abschluss der Montage wird das Einsatzstück 20 spätestens jetzt soweit verdreht, bis die gewünschte Winkellage erreicht ist. Dabei ist darauf zu achten, dass die Fixierbohrungen 24 mit jeweils einer der Bohrungen 18 fluchten. Abschließend wird das Einsatzstück 20 durch Eindrehen jeweils einer Schraube 38 in die mit der Fixierbohrung 24 fluchtende Bohrung 18 festgelegt. Die Innenseitenfläche 30 des Einsatzstücks 20 mit der Aussparung 32 ist nun dem verbleibenden Innenraum der Aufnahmehülse 12 zugewandt und bildet hierdurch die bereits genannte Verdrehsicherung.

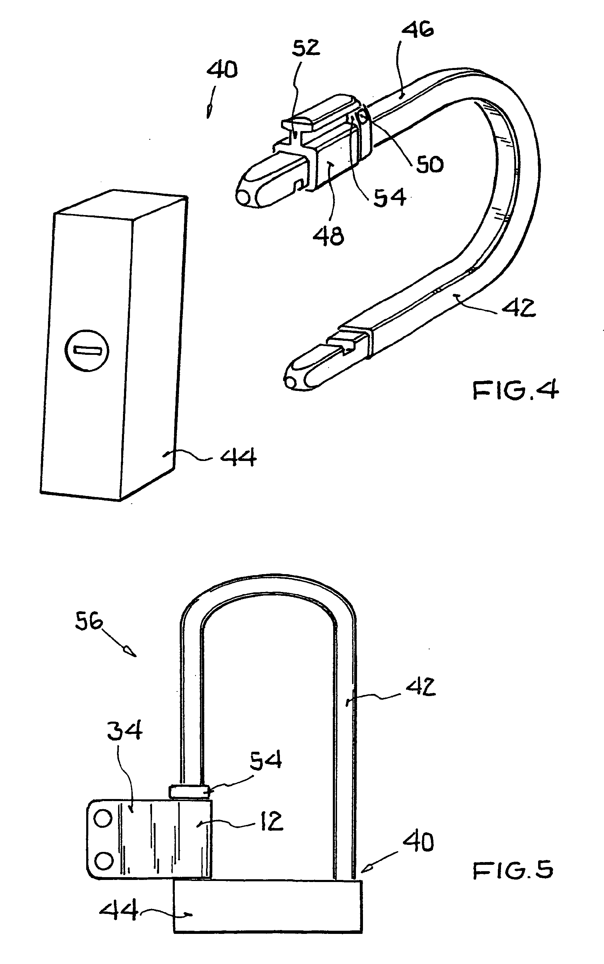

In Fig. 4 ist ein Zweiradschloss 40 dargestellt, das einen Bügel 42 und einen Schlosskörper 44 umfasst. Zum Abschließen eines Zweirads werden der Bügel 42 und der Schlosskörper 44 auf an sich bekannte Weise miteinander verbunden. Der eine Schenkel 46 des Bügels 42 ist mit einem Anker 48 versehen, der durch Festziehen einer Spannschraube 50 nach dem Prinzip einer Rohrschelle an dem Schenkel 46 festgelegt ist und letztlich als Adapterstück zum Anpassen des Bügelschenkels 46 an die Aufnahmehülse 12 mit Einsatzstück 20 dient. Der Anker 48 weist an einer Längsseite ein im Querschnitt T-förmiges, zur Aussparung 32 des Einsatzstücks 20 komplementäres Profil 52 auf. Der Anker 48 und die Aussparung 32 wirken also formschlüssig zusammen, wenn der Bügelschenkel 46 in die Aufnahmehülse 12 eingesetzt ist. An einem dem schlossseitigen Ende gegenüberliegenden Ende des Ankers 48 ist ein Anschlag 54 ausgebildet.

In Fig. 5 ist schließlich ein Zweiradschlosssystem 56 dargestellt, wobei das Zweiradschloss 40 mit der Halterung 34 verbunden ist. Zum Erreichen dieser Position wird zunächst der Bügel 42 von oben in axialer Richtung in die Aufnahmehülse 12 eingeführt. Dabei wird das Profil 52 soweit in die Aussparung 32 eingeschoben, bis der Anschlag 54 die Halterung 34 berührt.

Wenn zum einen der Rand 28 der Aufnahmehülse den Kragenabschnitt 22 geringfügig überragt und zum anderen der Durchmesser des Ankers 48 so groß gewählt ist, dass sich der Anschlag 54 nicht auf dem Einsatzstück 20, sondern auf dem Rand 28 der Aufnahmehülse abstützt, wird das Einsatzstück 20 weitgehend von axialen Kräften entlastet.

Weiterhin vorteilhaft ist, wenn sich ein dem Profil 52 gegenüberliegender Abschnitt des Ankers 48 an der Innenwand 36 der Aufnahmehülse 12 abstützt, so dass Drehmomente und Querkräfte, die von dem gehaltenen Schloss 40 erzeugt oder übertragen werden, nicht allein von dem Einsatzstück 20 aufgenommen werden müssen.

Schließlich ist zu dem gezeigten Ausführungsbeispiel noch anzumerken, dass anstelle der beiden Kragenabschnitte 22 auch nur ein einziger radialer Vorsprung vorgesehen sein kann. Anstelle des T-förmigen Profils 52 des Ankers 48 kann beispielsweise eine einfache axiale Rippe vorgesehen sein, die mit einer axialen Nut des Einsatzstücks 20 (als Aussparung 32) formschlüssig zusammenwirkt.

### Bezugszeichenliste

- 10: Haltevorrichtung
- 12: Aufnahmehülse
- 14: Rohrschelle
- 16: Ringschulter
- 18: Bohrung
- 20: Einsatzstück
- 22: Kragenabschnitt
- 24: Fixierbohrung
- 26: Außenseitenfläche
- 28: Rand
- 30: Innenseitenfläche
- 32: Aussparung
- 34: Halterung
- 36: Innenwand
- 38: Schraube
- 40: Zweiradschloss
- 42: Bügel
- 44: Schlosskörper
- 46: Schenkel
- 48: Anker
- 50: Spannschraube
- 52: Profil
- 54: Anschlag
- 56: Zweiradschlosssystem

- A: mittige Längsachse der Aufnahmehülse

## Patentansprüche

1. Halterung (34) zur Befestigung eines Zweiradschlosses (40) an einem Rahmenabschnitt eines Zweirads, mit einer Haltevorrichtung (10), die ein Befestigungsmittel (14) zur Befestigung der Haltevorrichtung (10) an dem Rahmenabschnitt des Zweirads und eine Aufnahmehülse (12) zur Aufnahme eines Bügelabschnitts (46) des Schlosses (40) aufweist,
**dadurch gekennzeichnet ,**
**dass** die Halterung (34) ferner ein Einsatzstück (20) aufweist, das für eine Vormontage in die Aufnahmehülse (12) einführbar und dort bezüglich der mittigen Längsachse (A) der Aufnahmehülse (12) in eine variable Winkellage drehbar ist, wobei das Einsatzstück (20) in einer Endmontagestellung mittels wenigstens einer Fixiereinrichtung (38) in seiner Winkellage an der Aufnahmehülse (12) festgelegt ist, wobei das Einsatzstück (20) in der Endmontagestellung bezüglich der mittigen Längsachse (A) der Aufnahmehülse (12) seitlich versetzt angeordnet ist, und wobei eine dem verbleibenden Innenraum der Aufnahmehülse (12) zugewandte Seitenfläche (30) des Einsatzstücks (20) eine Verdrehsicherung (32) für einen in die Aufnahmehülse (12) eingeführten Bügelabschnitt (46) des Schlosses (40) bildet.

2. Halterung nach Anspruch 1,
**dadurch gekennzeichnet ,**
**dass** das Einsatzstück (20) wenigstens einen radial nach außen gerichteten Vorsprung (22) aufweist, durch den das Einsatzstück (20) in der Endmontagestellung axial zumindest in einer Richtung an der Aufnahmehülse (12) festgelegt ist.

3. Halterung nach Anspruch 1 oder 2,
**dadurch gekennzeichnet ,**
**dass** das Einsatzstück (20) zwei an seinen Längsenden angeordnete, seitlich abstehende Kragenabschnitte (22) aufweist, die in der Endmontagestellung des Einsatzstücks (20) in eine jeweilige Ringschulter (16) der Aufnahmehülse (12) eingreifen oder ein jeweiliges Längsende der Aufnahmehülse (12) übergreifen.

4. Halterung nach einem der vorhergehenden Ansprüche,
**dadurch gekennzeichnet ,**
**dass** das Einsatzstück (20) an einer Seitenfläche (26), die der die Verdrehsicherung (32) bildenden Seitenfläche (30) gegenüberliegt, komplementär zu der Innenseitenfläche (36) der Aufnahmehülse (12) ausgebildet ist.

5. Halterung nach einem der vorhergehenden Ansprüche,
**dadurch gekennzeichnet ,**
**dass** das Einsatzstück (20) entlang seiner Längsrichtung zumindest im Bereich der Verdrehsicherung (32) einen konstanten Querschnitt aufweist.

6. Halterung nach einem der vorhergehenden Ansprüche,
**dadurch gekennzeichnet ,**
**dass** die Fixiereinrichtung eine oder mehrere Schrauben (38) oder Klemmstifte aufweist.

7. Halterung nach einem der vorhergehenden Ansprüche,
**dadurch gekennzeichnet ,**
**dass** die Aufnahmehülse (12) und/oder das Einsatzstück (20) mehrere Bohrungen (18, 24) zur Aufnahme der Fixiereinrichtung (38) aufweisen.

8. Halterung nach Anspruch 7,
**dadurch gekennzeichnet ,**
**dass** die Bohrungen (18) in gleichmäßiger Teilung angeordnet sind.

9. Halterung nach einem der Ansprüche 6 bis 8,
**dadurch gekennzeichnet ,**
**dass** die jeweilige Schraube (38) bzw. der jeweilige Klemmstift bezüglich der Längsachse der Aufnahmehülse (12) in axialer Richtung in
die Aufnahmehülse (12) eingesetzt ist und hierbei einen Fixierabschnitt (22) des Einsatzstücks (20) durchdringt.

10. Halterung nach einem der vorhergehenden Ansprüche,
**dadurch gekennzeichnet ,**
**dass** das Befestigungsmittel eine Rohrschelle (14), ein Spannband oder eine Lasche aufweist.

11. Halterung nach einem der vorhergehenden Ansprüche,
**dadurch gekennzeichnet ,**
**dass** das Befestigungsmittel (14) einstückig mit der Aufnahmehülse (12) verbunden ist.

12. Halterung nach einem der vorhergehenden Ansprüche,
**dadurch gekennzeichnet ,**
**dass** der Halterung ein Adapterstück (48) für den aufzunehmenden Bügelabschnitt (46) zugeordnet ist, das komplementär zu der Verdrehsicherung (32) des Einsatzstücks (20) ausgebildet ist.

13. Zweiradschlosssystem (56) mit einem einen Bügel (42) und einen
Schlosskörper (44) aufweisenden Zweiradschloss (40) und mit einer Halterung (34) nach einem der vorhergehenden Ansprüche.

14. Zweiradschlosssystem nach Anspruch 13,
**dadurch gekennzeichnet ,**
**dass** ein in die Aufnahmehülse (12) einführbarer Bügelabschnitt (46) komplementär zu der Verdrehsicherung (32) des Einsatzstücks (20) ausgebildet ist.

15. Zweiradschlosssystem nach Anspruch 13 oder 14,
**dadurch gekennzeichnet ,**
**dass** der Bügelabschnitt (46) einen Anker (48) mit T-förmigem Querschnitt oder eine axiale Rippe aufweist, wobei das Einsatzstück (20) eine im Querschnitt T-förmige Aussparung (32) oder eine axiale Nut besitzt.

16. Zweiradschlosssystem nach einem der Ansprüche 13 bis 15,
**dadurch gekennzeichnet ,**
**dass** der Bügelabschnitt (46) einen Anschlag (54) aufweist, der ein Einführen des Bügelabschnitts (46) in die Aufnahmehülse (12) begrenzt.
